(19) **Europäisches Patentamt / European Patent Office / Office européen des brevets**

(11) **EP 2 016 443 B1**

(12) **FASCICULE DE BREVET EUROPEEN**

(45) Date de publication et mention de la délivrance du brevet:
**29.12.2010 Bulletin 2010/52**

(21) Numéro de dépôt: **07728764.7**

(22) Date de dépôt: **03.05.2007**

(51) Int Cl.:
***G01S 13/90*** *(2006.01)*    ***G01S 13/87*** *(2006.01)*

(86) Numéro de dépôt international:
**PCT/EP2007/054311**

(87) Numéro de publication internationale:
**WO 2007/128777 (15.11.2007 Gazette 2007/46)**

(54) **PROCEDE POUR OBTENIR SIMULTANEMENT LA DETECTION DE NAVIRE ET LA CARTOGRAPHIE RADAR DE NAPPES DE POLLUTIONS, AU MOYEN D'UN RADAR AEROPORTE ROTATIF**

VERFAHREN ZUR GLEICHZEITIGEN DETEKTION VON SCHIFFEN UND RADARABBILDUNG VON SCHMUTZSTOFFTEPPICHEN MITTELS EINES ROTIERENDEN LUFTGESTÜTZTEN RADARS

METHOD FOR SIMULTANEOUS DETECTION OF SHIPS AND RADAR MAPPING OF POLLUTANT SLICKS, BY MEANS OF ROTATING AIRBORNE RADAR

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.05.2006 FR 0604050**

(43) Date de publication de la demande:
**21.01.2009 Bulletin 2009/04**

(73) Titulaire: **Thales**
**92200 Neuilly Sur Seine (FR)**

(72) Inventeurs:
• **QUELLEC, Jean-Michel**
  **29810 Ploumoguer (FR)**
• **CHABAH, Myriam**
  **29200 Brest (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 507 149    GB-A- 1 589 825**
**JP-A- 2 045 783    US-A- 5 357 259**

• **TELEPHONICS A GRIFFON COMPANY: "APS-143B(V)3/OceanEyeTM Maritime Surveillance Imaging and Tracking Radar System" INTERNET ARTICLE, [Online] 2005, XP002416216 Extrait de l'Internet: URL:http://www.telephonics.com/ products/oc eaneye.pdf> [extrait le 2007-01-24]**
• **ATANASSOV V ET AL: "Observation of Oil Slicks on the Sea Surface by Using Marine Navigation Radar" GEOSCIENCE AND REMOTE SENSING SYMPOSIUM, 1991. IGARSS '91. REMOTE SENSING: GLOBAL MONITORING FOR EARTH MANAGEMENT., INTERNATIONAL JUNE 3-6, 1991, NEW YORK, NY, USA,IEEE, US, vol. 3, 3 juin 1991 (1991-06-03), pages 1323-1326, XP010040641 ISBN: 0-87942-675-6**

**Description**

**DOMAINE DE L'INVENTION**

La présente invention concerne le domaine de la surveillance maritime et plus particulièrement le domaine des équipements de détection permettant de détecter la présence de nappes de produits polluants et d'effectuer une cartographie fine de telles nappes

**CONTEXTE DE L'INVENTION - ART ANTERIEUR**

Actuellement, sur les matériels existants, la surveillance maritime aéroportée destinée à la détection et au pistage des navires est assurée par des radars de surveillance classiques, à antennes rotatives par exemple, tandis que la surveillance et la détection de nappes d'hydrocarbures dérivantes est réalisée par des radars à antenne fixes latérales ou radars SLAR ("Side Looking Antenna Radars") selon la dénomination anglo-saxonne. De manière connue ces radars à antennes fixes comportent une ou deux antennes fixées d'un côté (ou des deux côtés) de l'avion.

Certains fabricants de radar, proposent des radars rotatifs présentant une certaine polyvalence de fonctionnement et permettant de réaliser par commutation de mode de fonctionnement, soit des tâches de surveillance classiques, soit des tâches de détection de nappe d'hydrocarbures, ou plus généralement d'agents polluants. Les deux modes de fonctionnement sont alors généralement exclusifs l'un de l'autre de sorte que, au cours d'une mission le radar utilisé procède alternativement ou successivement aux opérations suivantes:

- Une opération de détection et de pistage des navires: le radar fonctionne alors en mode surveillance avec une antenne en rotation,

- une opération de cartographie de la surface de la mer, par technique SAR (Synthetic Aperture Radar), l'antenne étant alors immobilisée de sorte que le lobe d'antenne soit dirigé dans une direction sensiblement perpendiculaire au cap de l'avion.

Ces systèmes, quoique polyvalents, souffrent d'un manque certain de souplesse d'utilisation. Ils nécessitent en outre de concevoir des missions de surveillance se déroulant en deux temps, un premier temps consacré à la surveillance pendant lequel il n'est pas possible d'effectuer de détection de nappes d'agents polluants et un deuxième temps consacré à la détection, durant lequel aucune tâche de surveillance n'est réalisée par le radar. Durant sa mission l'avion doit alors survoler deux fois chaque zone de surveillance. Cette alternance obligée conduit parfois, pour des raisons de sûreté notamment, à équiper l'avion d'un deuxième système exclusivement dédié à la surveillance de l'espace aérien et maritime. Cet ajout se traduit fatalement par un accroissement du prix des équipements installés à bord de l'avion.

Certains fabricants de radar, proposent également des systèmes uniquement dédiés à la surveillance comportant deux antennes fixes montées sur les flancs d'un avion, ou dos à dos sous l'avion, et pointées dans des directions opposées et perpendiculaires à l'axe de l'avion. Ces systèmes permettent de réaliser des images synthétiques de la surface balayée par le faisceau radar. Les techniques d'imagerie utilisées sont généralement des techniques connues, de type SAR en particulier. Ces systèmes dédiés à la détection et à la cartographie de zone polluées en surface présentent l'avantage de fonctionner avec des antennes toujours fixes il n'ont donc avantageusement pas besoin d'être équipés de moyens permettant de maintenir un antenne tournante dans une position fixe bien déterminée comme les systèmes évoqués dans le paragraphe précédent. En revanche, leurs antennes étant fixes aucune correction de la direction pointée n'est mécaniquement réalisable. D'autre part, un tel système est nécessairement associé à un système de surveillance classique.

Le document de brevet Britannique n°1 589 825, publié le 20/05/1981, décrit un système radar équipé d'une antenne rotative ou d'une antenne à balayage, pourvu de moyens permettant de déterminer les instants pour lesquels le faisceau d'antenne balaye un ou plusieurs secteurs angulaires déterminés, ces moyens permettant au radar d'être informé du balayage de ces secteurs et d'effectuer des acquisitions d'images radar à la volée. De tels moyens permettent avantageusement au radar de réaliser de manière répétitive une tâche particulière, chaque fois que le faisceau d'antenne balaye le ou les secteurs considérés, puis de réaliser des tâches plus conventionnelles de détection en dehors des secteurs considérés.

**PRESENTATION DE L'INVENTION**

L'invention décrite et revendiquée ici propose un procédé permettant, à partir d'un radar unique intégrant des moyens pour effectuer des tâches de surveillance et des tâches de cartographie, de remplir de manière simultanée, en un seul survol, les fonctions de surveillance de l'espace considéré et de détection des nappes d'hydrocarbures. A cet effet l'invention a pour objet un procédé pour exploiter un radar à impulsions embarqué sur un aéronef, comportant une antenne tournante sur 360°, des moyens d'émission, de réception et de traitement permettant de façon à effectuer simultanément des tâches de surveillance de l'espace environnant et des taches de cartographie d'une surface balayée par le faisceau radar, **caractérisé en ce qu**'il comporte au moins, à chaque tour d'antenne:

- une phase de fonctionnement en mode surveillance, durant laquelle le faisceau d'antenne balaye un premier secteur angulaire et effectue la détection, la localisation et l'analyse de la trajectoire des objets situés dans la région de l'espace balayée,

- une phase de fonctionnement en mode cartographie, durant laquelle le faisceau d'antenne balaye un deuxième secteur angulaire et détermine la position forme et l'étendue de nappes de produits flottant en surface.

Selon une caractéristique avantageuse du procédé selon l'invention, la phase de fonctionnement en mode cartographie, correspond à deux intervalles de temps distincts durant lesquels le faisceau d'antenne balaye deux secteurs angulaires distincts situés de part et d'autre de l'axe de l'avion, sensiblement perpendiculaire à l'axe de déplacement de l'avion. Ainsi, le procédé permet avantageusement d'effectuer simultanément de la surveillance et de la cartographie sur deux zones latérales distinctes.

Selon une autre caractéristique de l'invention, durant la phase de cartographie, on diminue la vitesse de rotation de l'antenne de façon à faciliter le traitement d'imagerie réalisé sur les échos reçus, la vitesse de rotation est déterminée en fonction de la largeur de la zone balayée et de la vitesse de l'avion.

Selon une autre caractéristique, durant la phase de cartographie, on modifie la bande passante du signal émis pour obtenir la résolution voulue.

Selon une autre caractéristique, durant la phase de cartographie, l'antenne effectue un balayage en site du secteur angulaire correspondant de façon à faire varier la distance minimale de la fauchée pour adapter cette distance en fonction de la position par rapport à l'avion de la zone cartographiée.

Le procédé selon l'invention permet avantageusement de doter un radar conventionnel à impulsions et à antenne tournante des moyens pour réaliser simultanément le suivi des navires et la cartographie des zones latérales, adjacentes à la trajectoire, dans le but de relever d'éventuelles traces de pollutions. Cette cartographie peut en outre avantageusement être réalisée sur les deux côtés bordant la trajectoire de l'avion et ce, avec une seule antenne.

Le procédé selon l'invention peut être appliqué à des tâches diverses telles que la surveillance aérienne de zones portuaires par survol de ces zones, ou encore l'établissement de cartes de résolution moyenne difficiles à réaliser avec des moyens radars conventionnels.

## DESCRIPTION DES FIGURES

Les caractéristiques et avantages du procédé selon l'invention apparaîtront clairement au cours de la description qui suit, description associée aux figures annexées qui présentent:

- la figure 1, Une illustration du contexte opérationnel de l'invention,
- la figure 2, une illustration du principe général de fonctionnement du procédé selon l'invention,
- la figure 3, une vue de dessus du faisceau émis pendant la phase de cartographie des secteurs latéraux,
- la figure 4, une coupe dans le plan vertical du faisceau émis pendant la phase de cartographie des secteurs latéraux,
- la figure 5, une illustration du principe de constitution d'une bande d'analyse par association des image obtenues par deux balayages consécutifs,
- la figure 6, un exemple de diagramme de variation de la vitesse de rotation de l'antenne en fonction du gisement considéré,

## DESCRIPTION DETAILLEE

La partie de la description qui suit présente les aspects spécifiques de l'invention, en particulier, en ce qui concerne la phase de fonctionnement du système en mode cartographie, ainsi que l'enchaînement des deux phases de fonctionnement.

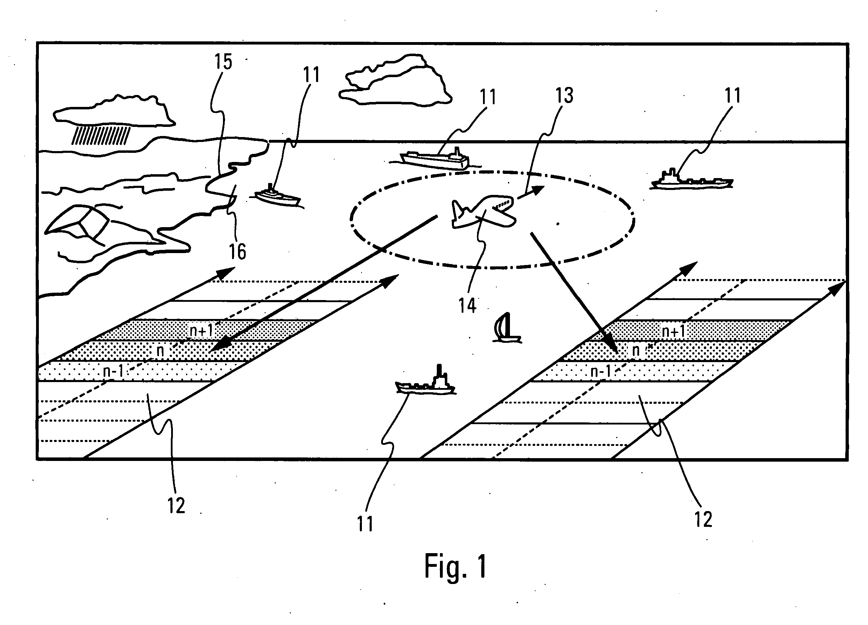

On s'intéresse à la figure 1. Cette figure illustre le contexte opérationnel de l'invention.

Comme on peut le constater sur la figure, l'invention s'adresse en particulier, mais de manière non limitative, aux aéronefs effectuant des missions de surveillance maritimes. De manière générale, ce type de mission a deux objets, d'une part la surveillance des navires et embarcations navigant sur la zone objet de la mission de surveillance, d'autre part la détection et la cartographie de zones sur lesquelles dérivent des nappes de produits polluants de type hydrocarbures. La présence de ces nappes peut avoir diverses origines, en particulier une vidange sauvage de ses cuves à fioul par un navire ou encore la perte d'un container par un navire ou même le naufrage d'un navire. La cartographie de ces nappes dérivante de produits potentiellement très dangereux pour l'être humain ou encore pour la faune et la flore est une tâche importante qui permet de déterminer l'origine et l'évolution de la pollution détectée. Dans ce contexte, une mission de surveillance maritime comporte donc deux tâches, une tâche générale de surveillance de la surface permettant en particulier de localiser les navires 11 évoluant dans la zone observée et une tâche spécifique d'observation de zones particulières 12, par exemple situées latéralement par rapport à la direction de progression 13 de l'aéronef 14 chargé de la mission. L'aéronef 14 est par exemple un avion, ou un hélicoptère traditionnels. Cependant cela peut également être un aéronef de surveillance automatique de type drone.

La tâche de surveillance s'exerce généralement au moyen d'un radar à impulsion équipé d'une antenne tournante, sur une large zone s'étendant sensiblement tout autour de l'aéronef. Le traitement des signaux radar est un traitement classique des radar de surveillance et consiste principalement à détecter des échos radar et surveiller la trajectoire des navires ayant réfléchi ces échos.

La tache de cartographie consiste quant à elle à détecter d'éventuelles nappes de produits dérivants et à d'en déterminer de manière très précise l'étendue et les contours. Pour réaliser ces fonctions de cartographie, l'aéronef utilise généralement un équipement radar, équipé d'une ou plusieurs antennes fixes dont le faisceau est dirigé dans une direction sensiblement perpendiculaire à l'axe de l'aéronef. Le traitement réalisé sur les écho reçus est alors un traitement de type imagerie qui s'intéresse plus à la précision des contours de la nappe détectée qu'à la détermination des paramètres liés au mouvements de la nappe.

Les deux types de tâche à réaliser requièrent donc des équipements différents ou tout au moins un équipement capable de fonctionner selon des modes de fonctionnement distincts.

Généralement, les aéronefs comportant un équipement unique à commutation de mode, effectuent les tâches de surveillance et de cartographie de manière séparée, en deux phase successives par exemple. La phase de fonctionnement en mode surveillance durant laquelle l'antenne radar tourne est suivie par une phase de fonctionnement en mode cartographie durant laquelle l'antenne est immobilisée dans une position donnée. Ces deux phases successives conduisent l'aéronef à survoler deux fois la zone de la mission générale de surveillance.

Les aéronefs équipés de deux équipements distincts sont quant à eux capables de réaliser les deux tâches de surveillance et de cartographie simultanément. Cependant cette simultanéité est obtenue au prix d'un accroissement non négligeable du coût d'équipement de l'aéronef.

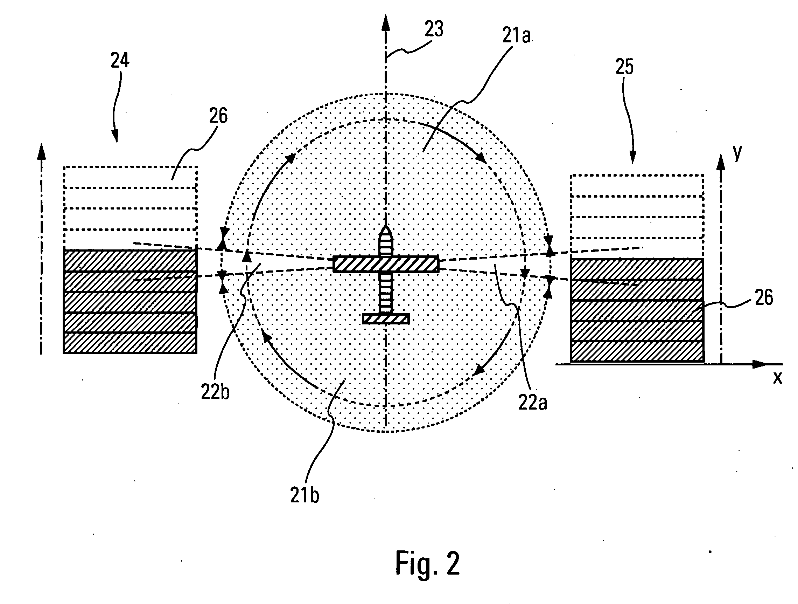

On s'intéresse à présent à la figure 2 qui illustre le mode de fonctionnement du procédé selon l'invention

Le procédé selon l'invention consiste à mettre en oeuvre un radar à impulsion, à antenne tournante, en modifiant le mode de fonctionnement du radar lors de la rotation de l'antenne. On définit ainsi deux zones angulaires autour de l'aéronef, une première zone 21 correspondant à un fonctionnement de l'équipement radar en mode surveillance, et une deuxième zone 22 correspondant à un fonctionnement de l'équipement radar en mode cartographie. Selon l'invention, la zone 21 est la zone la plus large et couvre un secteur angulaire 21 a orienté vers l'avant et un secteur angulaire 21 b orienté vers l'arrière de l'aéronef, tandis que la zone 22 d'étendue plus faible couvre un secteur angulaire orienté latéralement par rapport à l'axe 23 de l'aéronef, de manière sensiblement perpendiculaire par exemple.

Selon un mode particulier de mise en oeuvre du procédé selon l'invention, illustré par la figure 2, la zone 22 peut être constituée de deux secteurs angulaires 22a et 22b distincts, symétriques par rapport à l'axe 23. De la sorte l'aéronef est avantageusement capable d'effectuer simultanément la cartographie de deux zones latérales distinctes 24 et 25.

Selon l'invention, l'antenne est en rotation permanente, la vitesse de rotation de l'antenne pouvant varier suivant la zone 21 ou 22 couverte pour s'adapter au mode de fonctionnement correspondant. De même l'inclinaison de l'axe de l'antenne par rapport à l'horizontale peut varier suivant la zone couverte.

Selon l'invention, le fonctionnement du système radar mis en oeuvre dans la zone 21 est essentiellement un fonctionnement classique de radar de veille. Ce mode de fonctionnement connu n'est pas développé ici. Il consiste par exemple en un fonctionnement associant un traitement doppler à une fonction de pistage.

En revanche certains aspect du fonctionnement dans la zone 22 est développé dans la suite de la description.

Selon l'invention, le traitement des écho radars reçu en provenance des zones 24 et 25 est un traitement d'imagerie à haute résolution de type imagerie SAR par exemple (imagerie radar à ouverture synthétique ou " Synthetic Aperture Radar " selon la dénomination anglo-saxonne). Ce type de traitement, connu par ailleurs n'est pas développé ici.

La forme d'onde émise par le radar est alors adaptée pour optimiser un tel traitement. L'analyse des zones latérales 24 et 25 est ainsi réalisée par bandes juxtaposées 26 au rythme du déplacement de l'aéronef.

Dans le même but, la vitesse de rotation de l'antenne est modifiée lors de son passage dans les secteurs 22a et 22b de la zone 22. La vitesse appropriée au balayage de ces zones par le faisceau radar, est déterminée à partir d'une optimisation prenant notamment en compte les contraintes suivantes:

- le temps d'éclairement doit être suffisant pour obtenir la résolution de l'image dans la direction y correspondant à la route avion;
- la vitesse de rotation de l'antenne doit être suffisante pour assurer la continuité, de tour d'antenne à tour d'antenne, et permettre l'association d'un tour à l'autre des images réalisées lors du passage de l'antenne dans un secteur donné, 22a ou 22b, de la zone 22 les secteurs angulaires latéraux;
- la vitesse de rotation de l'antenne doit être suffisante pour assurer le taux de rafraîchissement souhaité des détections des navires effectuées lors du fonctionnement en mode surveillance dans les secteurs 21 a et 21 b de la zone 21.

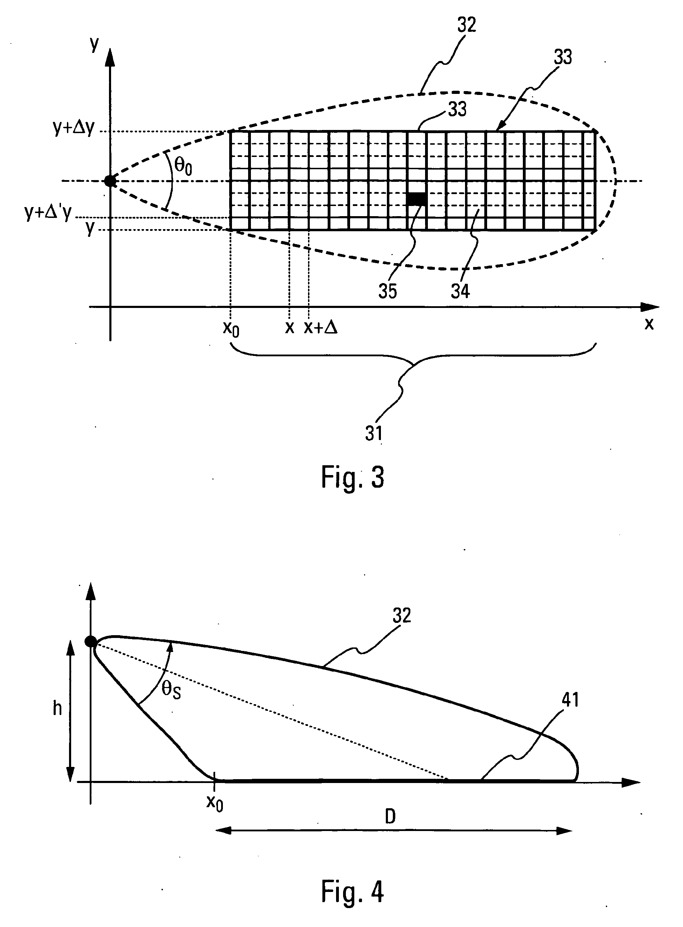

Dans le même but également, le site de l'antenne est ajusté à une valeur optimale, lors du passage de l'antenne dans les secteurs latéraux 22a et 22b. L'ajustement est calculée pour tenir compte de l'altitude du porteur et de la fauchée de la bande d'image demandée par l'opérateur pour la zone latérale 24 ou 25 considérée. Par fauchée on entend la zone 41, illustrée par les figures 3 et 4, qui correspond à l'intersection du faisceau émis par le radar monté sur l'aéronef avec la surface de l'eau ou le sol.

Ainsi, lors de la mise en oeuvre du procédé selon l'invention, le système radar alterne des phases de fonctionnement pour lesquelles la forme d'onde émise, ainsi que la vitesse de rotation de l'antenne et l'orientation du faisceau émis varient.

Lorsque l'antenne est pointée dans un secteur angulaire correspondant à la zone 21 dédiée au fonctionnement en mode surveillance, le système radar émet la forme d'onde correspondante et la vitesse de rotation de l'antenne ainsi que l'angle de site du faisceau émis prennent les valeurs adaptées à ce mode. Le radar effectue les traitements de détection et de pistage des navires.

De même, lors du passage d'un secteur de la zone 21 à un secteur de la zone 22, dédiée au fonctionnement en mode cartographie, la vitesse de rotation de l'antenne ainsi que la forme d'onde émise par le système radar sont modifiées pour correspondre à un mode de traitement par imagerie. De plus le site du faisceau émis est modifié pour prend une valeur correspondant à la fauchée de la bande d'image demandée par l'opérateur.

On s'intéresse à présent aux figures 3 et 4.

La figure 3 donne une représentation schématique du principe de fonctionnement du mode cartographie mise en oeuvre par le procédé selon l'invention. Dans ce mode de fonctionnement on réalise, comme il a été dit précédemment, une image radar à haute résolution sur une bande géographique 31 incluse dans la zone de la surface correspondant à l'intersection de la surface avec le faisceau d'antenne 32. Cette zone est représentée par le segment 41 de longueur D dans la vue en coupe verticale de la figure 4. Le segment 41 correspond à la fauchée évoquée précédemment. Cette fauchée peut ainsi être caractérisée par une distance minimale $x_0$ et une longueur D. Sa largeur $\Delta y$, sur l'axe Y, est outre définie de manière classique, comme étant égale au produit $x_0\theta_0$ de la distance minimale de la fauchée par l'angle d'ouverture du faisceau exprimé en radians.

Dans un mode d'analyse classique ne faisant pas appel à des techniques d'imagerie à haute résolution la bande d'analyse 31 est décomposée sur l'axe x en cellules distance 33, représentées en traits pleins sur la figure, la taille $\Delta x$ de la cellule définissant la résolution du système radar suivant l'axe x, résolution qui dépend de manière connue de la <u>bande</u> passante des impulsions émises. De la sorte les dimensions d'une nappe de produit dérivant à la surface peuvent être connues avec une précision selon l'axe X égale à la taille de la cellule distance et selon l'axe Y par la largeur $\Delta y$.

La cellule d'analyse ainsi défini avec un mode de traitement radar conventionnel, de type traitement de veille, pose un problème de résolution en ce qui concerne l'axe d'analyse Y. En effet si la résolution désirée peut être ajustée de manière relativement simple selon l'axe X, par adaptation de la forme d'onde émise, la résolution selon l'axe Y dépend de la largeur du faisceau émis et ne peut être adapté de manière aussi simple. Généralement la taille de la cellule distance selon l'axe Y est bien supérieure à la taille de cette même cellule selon l'axe X ce qui ne permet pas de former une image de haute résolution. Ainsi, pour un radar dont la largeur de faisceau $\theta_0$ est égale à 3,5° et dont la portée D est égale à 100 km, la résolution transverse $rd_t$ à la distance D, donnée par la relation $rd_t = D \cdot \theta_0$, est égale à environ 6000 m, tandis que la résolution selon l'axe X fonction la largeur d'impulsion émise peut être sensiblement égal à 15m pour une impulsion de 0,1 $\mu$s.

C'est pourquoi le procédé selon l'invention prévoit que le traitement associé au mode de fonctionnement cartographie est un procédé d'imagerie de type SAR, qui substitue à la largeur $\Delta Y$ du faisceau une largeur $\Delta'y$ liée à l'ouverture synthétique obtenue. On obtient ainsi avantageusement des cellules d'analyse 34, représentées en traits pointillés sur la figure, dont la dimension $\delta y$ selon l'axe Y est sensiblement égale à la dimension $\Delta x$.

Cet accroissement de résolution sur l'axe Y se traduit également par un accroissement du contraste. En effet, si l'on considère une nappe de produit ayant la taille d'une cellule d'analyse haute résolution, dont la surface est donc sensiblement égale à $s = \Delta x \cdot \Delta'y$, le contraste entre le niveau de signal réfléchi par la cellule d'analyse contenant cette nappe et le niveau d'une cellule d'analyse ne contenant aucune nappe de produit, est défini de manière connue par les relations suivantes:

$$- \quad C = \frac{(N-1) \cdot S_{mer} + S_{produit}}{N \cdot S_{mer}} \quad [1] \quad \text{pour un}$$

mode de traitement basse résolution pour laquelle la cellule d'analyse a pour dimensions ($\Delta x$, $\Delta y$),

$$- \quad C = \frac{S_{produit}}{S_{mer}} \quad [2] \quad \text{pour un mode de traitement}$$

haute résolution de type SAR par exemple.

Dans les relations [1] et [2] $S_{mer}$ représente le coefficient de rétrodiffusion du signal par la mer, tandis que $S_{produit}$ représente celui du produit dérivant, $S_{produit}$ étant généralement inférieur à $S_{mer}$. N représente le nombre de cellules de haute résolution 34 contenues dans une cellule de basse résolution 33. Dans le premier cas on compare deux cellule 33 et 34 de basse résolution dont l'une contient une nappe de produit 35 de la taille d'une cellule de haute résolution 34, tandis que dans l'autre cas on compare deux cellule de haute résolution 34 dont l'une contient la nappe de produit 35 et l'autre pas.

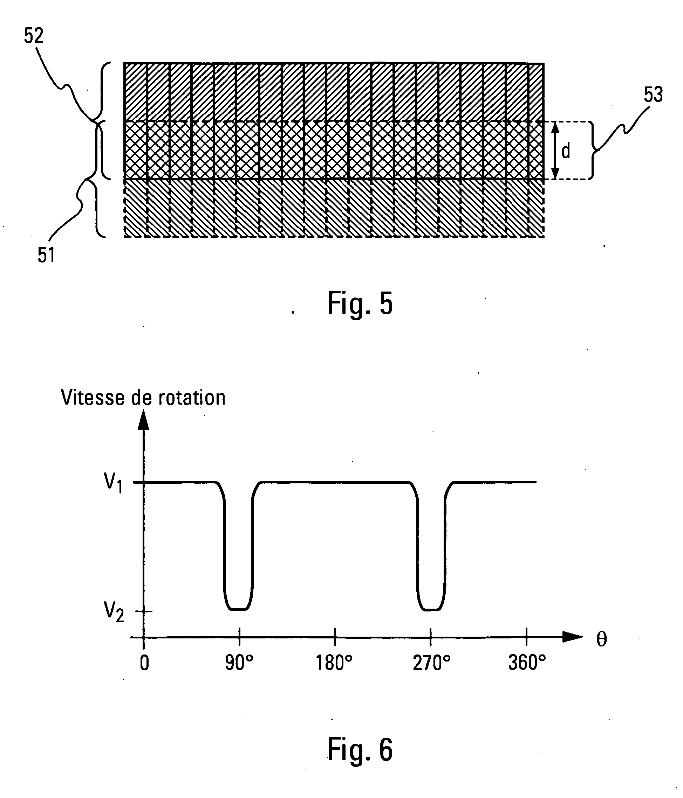

On considère à présent la figure 5.

Pendant l'intervalle de temps pendant lequel l'antenne balaye un des secteurs, 22a ou 22b, dédiés au fonctionnement en mode cartographie, le radar émet de manière récurrente des impulsions et traite le signal réfléchi de façon à élaborer une image radar. La vitesse de rotation de l'antenne est adaptée pour assurer un temps d'éclairement suffisant pour obtenir une image à haute résolution 51.

Selon l'invention, cette image 51 est associée, de manière connue, à l'image 52 formée au tour d'antenne suivant de façon à obtenir une bande d'analyse complète. Il est à noter que les bandes 51 et 52 présente une zone de chevauchement 53 qui permet d'assurer la continuité de l'image globale réalisée même en cas de fluctuation de la vitesse de l'aéronef. La largeur d de la zone de chevauchement, fonction de la vitesse de l'aéronef et de la vitesse de rotation de l'antenne, est défini par la relation suivante:

$$d = Lb - (V_{aéronef} \cdot T_{antenne}) \quad [3]$$

où $V_{aéronef}$ représente la vitesse de déplacement de l'aéronef et $T_{antenne}$ la période de rotation de l'antenne et Lb la largeur de bande d'image (51 ou 52), selon l'axe y, traitée à chaque passage d'antenne.

Ainsi, pour un aéronef se déplaçant à 150 m/s et équipé d'une antenne effectuant un tour toute les 10 s, si la largeur de bande d'image est de 3000 m, le chevauchement sera par exemple de 1500 m.

On s'intéresse ensuite à la figure 6.

Comme il a été dit précédemment pour assurer une plus grande efficacité au procédé, c'est à dire pour obtenir une image haute résolution des zones latérales 12 et assurer en même temps un taux de rafraîchissement convenable positions des navires détectés en dehors des 2 zones latérales, le procédé selon l'invention prévoit avantageusement que la vitesse de rotation de l'antenne puisse varier en fonction du secteur balayé. La figure 6 présente un exemple possible de loi de variation de la vitesse de rotation de l'antenne en fonction du secteur angulaire balayé. Dans cet exemple, non limitatif, qui concerne le cas d'un système radar réalisant deux images latérales simultanées selon des secteurs angulaire situés respectivement à 90° et à 270° par rapport à la direction de progression de l'aéronef. Dans cet exemple la vitesse de rotation de l'antenne prend une valeur $V_1$ lorsqu'elle balaye les secteurs angulaires constituant la zone 21 et une valeur $V_2$ plus faible lorsqu'elle balaye les secteurs angulaires constituant la zone 22.

Le procédé selon l'invention peut ainsi être décrit par l'exécution alternée et périodique, par le système radar de deux taches distinctes. La première tâche consiste à surveiller la surface environnant l'aéronef pour détecter les navires circulant dans la zone considérée et suivre leurs mouvements: cette tâche représente en quelque sorte la tâche de fond du système. La seconde tâche consiste à élaborer une image à haute résolution de deux zones privilégiées de la surface, situées de part et d'autre de la trajectoire suivie par l'aéronef. Selon l'invention, la commutation d'une tâche à l'autre est accompagnée d'un changement du mode de fonctionnement du système radar.

Ainsi, pour passer de la tâche de surveillance à la tâche d'imagerie, le système modifie la forme d'onde émise, la vitesse de rotation de l'antenne ainsi que l'orientation du faisceau.

Ensuite, durant l'exécution de la tâche d'imagerie, le système applique au signal reçu un traitement de type imagerie radar à haute résolution.

Inversement pour passer de la tâche d'imagerie à la tâche de surveillance le système adopte une forme d'onde adaptée et modifie la vitesse de rotation de l'antenne et l'orientation du faisceau pour pouvoir assurer un taux de rafraîchissement des détections effectuées et le pistage des navires correspondants. Ensuite, durant l'exécution de la tâche de surveillance, le système applique au signal reçu un traitement radar de type classique permettant notamment de détecter et de caractériser les navires présents et d'en effectuer le pistage.

Le procédé selon l'invention peut évidemment être mis en oeuvre pour des applications différentes de la recherche de nappes de produits polluants dérivants. En particulier il peut être utilisé pour effectuer de manière économique de la reconnaissance côtière ou plus largement de la reconnaissance de terrain. Ainsi par exemple si l'on considère la figure 1, il est possible d'envisager de mettre en oeuvre le procédé selon l'invention pour effectuer une reconnaissance de la côte 15 qui borde l'étendue marine. Pour ce faire il suffit de faire se déplacer l'aéronef 14 parallèlement à la côte et à proximité de celle-ci, la fauchée du faisceau radar pouvant être adaptée de sorte que la zone imagée couvre la bande côtière. Une telle mise en oeuvre du procédé selon l'invention permet de tirer profit de la résolution du système radar en mode imagerie pour par exemple effectuer une cartographie de la côte, ou encore pour déterminer le nombre de navires se trouvant amarrés à l'intérieur d'un port ou dans une anse protégée 16.

**Revendications**

1. Procédé d'exploitation mixte d'un radar à impulsions embarqué sur un aéronef (14), comportant une antenne tournante sur 360°, des moyens d'émission, de réception et de traitement permettant d'effectuer des tâches de surveillance d'une première zone de la surface balayée par le faisceau radar et des tâches de cartographie d'une seconde zone de la surface, le procédé comportant au moins, à chaque tour d'antenne:

> - une phase de fonctionnement en mode surveillance, durant laquelle le faisceau d'antenne balaye un premier secteur angulaire (21 a, 21 b) dans lequel le radar effectue la détection, la localisation et l'analyse de la trajectoire des objets (11) situés dans la région de l'espace balayée,
> - une phase de fonctionnement en mode cartographie, durant laquelle le faisceau d'antenne balaye un deuxième secteur angulaire (22a, 22b) et durant laquelle le radar réalise la cartographie de la zone balayée en élaborant l'image à haute résolution d'une bande de la surface (12) s'étendant latéralement par rapport à la direction de progression (13) de l'aéronef;

les images à haute résolution constituées tour d'antenne après tour d'antenne étant associées pour former une image à haute résolution globale d'une zone de la surface s'étendant de part et d'autre de la direction de progression (13) de l'aéronef;
**caractérisé en ce que**, l'antenne ayant une vitesse de rotation donnée durant la phase de fonctionnement en mode surveillance, la vitesse de rotation de l'antenne est diminuée, lors de la phase de fonctionnement en mode cartographie, de façon à assurer un temps d'éclairement suffisant pour permettre un traitement par imagerie à haute résolution de la zone balayée (24, 25); la vitesse de rotation durant la phase de fonctionnement en mode cartographie étant déterminée en fonction de la largeur du faisceau (32) émis et de la vitesse de l'aéronef (14); la vitesse de rotation de l'antenne durant la phase de fonctionnement en mode surveillance étant déterminée, de façon à assurer le taux de rafraichissement souhaité des détections opérées en mode surveillance et à permettre l'association d'un tour à l'autre des images réalisées à chaque passage de l'antenne dans le secteur de fonctionnement (22a, 22b) en mode cartographie.

2. Procédé selon la revendication 1, dans lequel la phase de fonctionnement en mode cartographie, correspond à deux intervalles de temps distincts durant lesquels le faisceau d'antenne balaye deux secteurs angulaires distincts (22a, 22b) situés de part et d'autre de l'axe de l'aéronef (14) et sensiblement perpendiculaires à la direction de déplacement (13) de l'aéronef

3. Procédé selon l'une des revendications 1 ou 2, dans lequel, durant la phase de cartographie, l'antenne effectue un balayage en site du secteur angulaire correspondant de façon à faire varier la distance minimale de la fauchée ($x_0$).

4. Application du procédé selon l'une quelconque des revendications 1 à 3 à la détection et à la cartographie de nappe dérivantes de produits polluants.

5. Application du procédé selon l'une quelconque des revendications 1 à 3 à la détection et à la cartographie d'une bande côtière.

6. Application du procédé selon l'une quelconque des revendications 1 à 3 à la cartographie aérienne d'une bande de terrain.

**Claims**

1. A process for cross-system use of a pulse radar onboard an aircraft (14), including an antenna rotating around 360°, and emitting, receiving and processing means for performing surveillance tasks in a first zone of the surface scanned by the radar beam and mapping tasks in a second zone of the surface, the process, for each rotation of the antenna, at least comprising:

    - an operating phase in surveillance mode, during which the antenna beam scans a first angular sector (21a, 21b) in which the radar detects, locates and analyses the trajectory of objects (11) located in the region of the scanned area;
    - an operating phase in mapping mode, during which the antenna beam scans a second angular sector (22a, 22b) and during which the radar maps the scanned zone while developing a high resolution image of a strip of the surface (12) extending laterally relative to the moving direction (13) of the aircraft;

    the high resolution images which are constituted from successive rotations of the antenna being associated to form an overall high resolution image of the surface extending on both sides of the moving direction (13) of the aircraft;
    **characterised in that**, given a predetermined rotation speed of the antenna during the operating phase in surveillance mode, the rotation speed of the antenna is reduced during the operating phase in mapping mode, so as to assure sufficient illumination time to allow high resolution image processing of the scanned zone (24, 25); the rotation speed during the operating phase in mapping mode being determined as a function of the width of the emitted beam (32) and the speed of the aircraft (14); the rotation speed of the antenna during the operating phase in surveillance mode being determined so as to assure the required refreshment rate for detections undertaken in surveillance mode and to allow association, from one rotation to the next, of the images produced each time the antenna sweeps the operating sector (22a, 22b) in mapping mode.

2. The process according to claim 1, wherein the operating phase in mapping mode corresponds to two distinct time intervals during which the antenna beam scans two distinct angular sectors (22a, 22b) located on both sides of the axis of the aircraft (14) and which are essentially perpendicular to the moving direction (13) of the aircraft.

3. The process according to any one of claims 1 to 2, wherein, during the mapping phase, the antenna perform an elevation scanning of the corresponding angular sector so as to vary the minimum distance of the scan swath ($x_0$).

4. An application of the process, according to any ane of claims 1 to 3, to the detection and the mapping of drifting pollutant slicks.

5. An application of the process, according to any one of claims 1 to 3, to the detection and the mapping of a coastal strip.

6. An application of the process, according to any one of claims 1 to 3, to the aerial mapping of a strip of land.

**Patentansprüche**

1. Verfahren zur systemübergreifenden Nutzung eines Impulsradars an Bord eines Luftfahrzeugs (14) mit einer um 360° rotierenden Antenne sowie Sende, Empfangs und Verarbeitungsmitteln zum Ausführen von Überwachungsaufgaben in einer ersten Zone der von dem Radarstrahl abgetasteten Fläche und von Kartografierungsaufgaben in einer zweiten Zone der Fläche, wobei das Verfahren bei jeder Rotation der Antenne wenigstens Folgendes beinhaltet:

    - eine Betriebsphase im Überwachungsmodus, während der der Antennentrahl einen ersten Winkelsektor (21a, 21b) abtastet, in dem das Radar die Flugbahn von in der Region des abgetasteten Bereichs befindlichen Objekten (11) erfasst, ortet und analysiert;
    - eine Betriebsphase im Kartografiemodus, während der der Antennenstrahl einen zweiten Winkelsektor (22a, 22b) abtastet und während der das Radar die abgetastete Zone kartografiert und dabei ein Hochauflösungsbild eines Streifens der Fläche (12) entwickelt, der lateral relativ zur Bewegungsrichtung (13) des Luftfahrzeugs verläuft;

    wobei die Hochauflösungsbilder, die bei aufeinander folgenden Rotationen der Antenne entstehen, assoziiert werden, um ein Gesamthochauflösungsbild der Fläche zu bilden, die sich auf beiden Seiten der Bewegungsrichtung (13) des Luftfahrzeugs erstreckt;
    **dadurch gekennzeichnet, dass** die Antenne eine vorbestimmte Rotationsgeschwindigkeit während der Betriebsphase im Überwachungsmodus hat, wobei die Rotationsgeschwindigkeit der Antenne während der Betriebsphase im Kartografiemodus verringert wird, um eine ausreichende Beleuchtungszeit zu gewährleisten, um eine Hochauflösungsbildverarbeitung der abgetasteten Zone (24, 25) zu ermöglichen; wobei die Rotationsgeschwindigkeit während der Betriebsphase im Kartografiemodus in Abhängigkeit von der Breite des ausgesendeten Strahls (32) und der Geschwindigkeit des Luftfahrzeugs (14) ermittelt wird; wobei die Rotationsgeschwindigkeit der Antenne während der Betriebsphase im Überwachungsmodus so bestimmt wird, dass die benötigte Auffrischungsrate for im Überwachungsmodus durchgeführte Erfassungen gewährleistet wird, und dass eine Assoziation, von einer Rotation zur nächsten, der Bilder bei jeder Passage der Antenne über den Betriebssektor (22a, 22b) im Kartografiemodus ermöglicht wird.

2. Verwahren nach Anspruch 1, wobei die Betriebsphase im Kartografiemodus zwei getrennten Zeitintervallen entspricht, während der der Antennenstrahl zwei getrennte Winkelsektoren (22a, 22b) abtastet, die sich auf beiden Seiten der Achse des Luftfahrzeugs (14) befinden und die im Wesentlichen lotrecht zur Bewegungsrichtung (13) des Luftfahrzeugs sind.

3. Verfahren nach Anspruch 1 oder 2, wobei die Antenne während der Kartografiephase eine Neigungsabtastung des entsprechenden Winkelsektors durchführt, um den Mindestabstand der Abtastschneise (x0) zu variieren.

4. Anwendung des Verfahrens nach einem der Ansprüche 1 bis 3 auf das Erfassen und Kartografieren von Schmutzstoffteppichen.

5. Anwendung des Verfahrens nach einem der Ansprüche 1 bis 3 auf das Erfassen und Kartografieren eines Küstenstreifens.

6. Anwendung des Verfahrens nach einem der Ansprüche 1 bis 3 auf die Luftbildvermessung eines Landstreifens.

Fig. 1

EP 2 016 443 B1

Fig. 2

EP 2 016 443 B1

Fig. 3

Fig. 4

52

53

51

d

## Fig. 5

Vitesse de rotation

$V_1$

$V_2$

0    90°    180°    270°    360°    θ

## Fig. 6

**EP 2 016 443 B1**

**RÉFÉRENCES CITÉES DANS LA DESCRIPTION**

**Documents brevets cités dans la description**

- GB 1589825 A